# EUROPÄISCHE PATENTANMELDUNG

(11) **EP 1 491 455 A1**
(43) Veröffentlichungstag der Anmeldung: **29.12.2004**
(21) Anmeldenummer: 04011819.2
(22) Anmeldetag: 18.05.2004
(51) Int. Cl.: B65D 19/42

(54) **Transportvorrichtung für eine Palette**

(30) Priorität: 23.06.2003 DE 10328065
(71) Anmelder: Horst, Gruber, 83607 Holzkirchen (DE)
(72) Erfinder: Gruber, Bruno, 82140 Olching (DE); Gruber, Horst, 83607 Holzkirchen (DE)
(74) Vertreter: Dosterschill, Peter, Dr.

(57) **Zusammenfassung**

Eine Transportvorrichtung für eine Palette (100) weist mindestens eine Rolleinheit (10) mit einem Klemmbügel (12) zum Anklemmen der Rolleinheit (10) an die Palette (100) auf. An dem Klemmbügel (12) ist drehbar ein Rollelement (16) angeordnet.

## Beschreibung

Die vorliegende Erfindung betrifft eine Transportvorrichtung für eine Palette.

Leere Paletten, insbesondere sogenannte Europaletten, werden wegen ihres vergleichsweise hohen Gewichts üblicherweise in horizontaler Weise mit Gabelstaplern oder Palettenhubwagen transportiert. In der Bereitschaftsposition und während des Transports in horizontaler Position versperren diese großflächigen Paletten häufig den Weg und bilden somit auch eine Unfallquelle.

Bekannt sind als "Möbelhunde" bezeichnete Transportwagen, mit denen die Paletten einzeln auch in senkrechter Weise transportiert werden können. Hierbei besteht jedoch das Problem, dass die jeweilige Palette zuerst auf einen derartigen Transportwagen gehoben werden muss, was einen hohen Kraftaufwand erfordert. Darüber hinaus ist die Palette nicht lagegesichert und kann leicht während des Transports von dem jeweiligen Transportwagen herunterrutschen.

In den meisten Fällen werden volle Paletten von einer Transportfirma geliefert und mit einem mitgeführten Gabelstapler oder Palettenhubwagen abgeladen, so dass für die leere Palette keine Transportvorrichtung verfügbar ist.

Aus der DE 3414288 C2 ist ein Seitenwandhalter für Palettenseitenwände stapelbarer Flachpaletten bekannt. Der Seitenwandhalter besteht aus einem U-förmigen Bügel der über einen Palettenfuß schiebbar ist und eine Halterung für eine Seitenwand aufweist. Der Seitenwandhalter kann eine Bodenplatte aufweisen, an der eine Lenkrolle so angebracht ist, dass sie unter der Unterseite der Palette angeordnet ist und die Palette auf mehreren Seitenwandhaltern horizontal verfahren werden kann.

Aus der US 2,916,771 ist ein Möbelbock zum Bewegen von Tischen oder ähnlichem bekannt, der einen länglichen, im wesentlichen U-förmigen Rahmen mit zwei seitlich angeordneten Rollen aufweist. Ein Seitenelement des U-förmigen Rahmens steht unter einem gering geneigten Winkel über das andere Seitenelement über und weist einen Handgriff auf. Wenn eine Stirnfläche beispielsweise einer Tischplatte in den U-förmigen Rahmen eingelegt wird, legt sich diese Tischfläche an die geneigte Fläche an und das Möbelstück kann verfahren werden.

Aus der DE 198 55 595 A1, der DE 298 23 445 U1, der DE 91 04 280 U1, der DE 17 88 388 U, der DD 41 330 und der CH 6 91 178 A5 sind weitere Rollvorrichtungen für Paletten bzw. Möbelstücke bekannt.

Der Erfindung liegt die Aufgabe zugrunde, eine Transportvorrichtung für eine Palette zu schaffen, welche einfach aufgebaut ist und mit welcher der Transport der Palette auf einfache und platzsparende Weise erfolgen kann.

Diese Aufgabe wird durch die in Anspruch 1 angegebenen Merkmale gelöst.

Erfindungsgemäß umfasst eine Transportvorrichtung für eine Palette mindestens eine Rolleinheit, wobei die Rolleinheit einen Klemmbügel zum Anklemmen der Rolleinheit an der Palette aufweist. Am Klemmbügel ist mindestens ein Rollelement, vorzugsweise mindestens ein Rad angeordnet. Nach Aufstecken der mindestens einen Rolleinheit wird die Palette an ihrer Stirnseite in eine im wesentlichen senkrechte Stellung geschwenkt, so dass die mindestens eine Rolleinheit mit dem Boden in Kontakt gelangt, auf dem die Palette - in vertikaler Position - zum Bestimmungsort gerollt werden kann.

Die erfindungsgemäße Transportvorrichtung ist mit einer Mehrzahl von Vorteilen verbunden. Sie besteht aus mindestens einer Rolleinheit, die einfach aufgebaut ist. Sie umfasst einen Klemmbügel, an dem mindestens eine Rolleinheit angeordnet ist. Die Rolleinheit lässt sich mit nur einem Handgriff in einfacher Weise an die Palette anstecken bzw. an diese anklemmen und bewirkt einen festen Sitz der Palette im Klemmbügel. Der Klemmbügel weist zwei Seitenschenkel auf, die im aufgesteckten bzw. angeklemmten Zustand in der Achse der Bewegungsrichtung angeordnet sind. Dagegen weist der Klemmbügel in Richtung quer zur Bewegungsrichtung keine Seitenschenkel auf. Damit lässt sich der Klemmbügel an die Palette anstecken bzw. an diese anklemmen, ohne dass die Palette anzuheben ist. Damit entfällt praktisch jeder Kraftaufwand für das Anstecken bzw. Anklemmen der erfindungsgemäßen Transportvorrichtung.

In ebenso einfacher Weise lässt sich die Rolleinheit am Bestimmungsort wieder von der Palette lösen.

Da die Palette während des Transports in eine senkrechte Position geschwenkt ist, nimmt sie während des Transports nur wenig Platz ein und benötigt nur vergleichsweise wenig freien Raum, so dass ein Transport selbst in den Fällen ermöglicht wird, in denen ein vergleichsweise kleiner Raum, zum Beispiel zwischen Lastfahrzeugen und auf dem Boden gelagerten Gütern zur Verfügung steht.

Die Transportvorrichtung kann eine Räderanordnung aufweisen, die die Lenkung der Transportvorrichtung und der transportierten Palette ermöglicht. Die Bewegungsrichtung der Transportvorrichtung bzw. der Palette lässt sich durch Verschwenken in einfacher Weise steuern. Im übrigen weist die Transportvorrichtung den Vorteil auf, dass sie in ihrem auf die Palette aufgesetztem Zustand beim Transport nicht über diese seitlich übersteht.

Die erfindungsgemäße Transportvorrichtung ersetzt hinsichtlich des Transports von Paletten Gabelstapler bzw. Palettenhubwagen. Damit zeichnet sich die erfindungsgemäße Transportvorrichtung auch durch einen außerordentlich großen wirtschaftlichen Vorteil aus.

Vorteilhafte Weiterbildungen der Erfindungen sind in den Unteransprüchen angegeben.

Die Erfindung wird nun an Hand der Zeichnungen näher erläutert. Darin zeigen:
- Figur 1: eine Perspektivansicht einer Palette mit zwei an dieser angeordneten Rolleinheiten,
- Figur 2A bis 2C: Vorderansichten einer in einer senkrechten Stellung befindlichen Palette mit Rolleinheiten in verschiedenen Neigungslagen,
- Figur 3: eine Rolleinheit mit einem Rad,
- Figur 4: eine Rolleinheit mit drei Rädern,
- Figur 5: eine Rolleinheit mit einem lenkbaren Doppelrad,
- Figur 6: eine schematische Ansicht einer Palette mit zwei Rolleinheiten, die je ein Rad aufweisen,
- Figur 7: eine schematische Ansicht einer Palette mit zwei Rolleinheiten, von denen die eine ein Rad und die andere drei Räder aufweist,
- Figur 8: eine schematische Ansicht einer Palette mit zwei Rolleinheiten, von denen beide drei Räder aufweisen,
- Figur 9: eine schematische Ansicht einer Palette mit zwei Rolleinheiten, von denen die eine Rolleinheit ein Rad und die andere Rolleinheit ein lenkbares Doppelrad aufweist,
- Figur 10: eine schematische Ansicht einer Palette mit zwei Rolleinheiten, von denen beide Rolleinheiten unlenkbare Doppelräder aufweisen,
- Figur 11: eine schematische Ansicht einer Palette mit zwei Rolleinheiten, von denen beide lenkbare Doppelräder aufweisen,
- Figur 12: eine perspektivische Ansicht der Palette, an der lediglich eine Rolleinheit, und zwar an einem (dem mittleren) Abstandshalter vorgesehen ist sowie eine Seitenansicht der Palette,
- Figur 13: eine perspektivische Ansicht der Palette in verschiedenen Arbeitsschritten bei dem Aufrichten aus der horizontalen Position, über eine geneigte Position in die vertikale Position, sowie eine Seitenansicht der Palette in vertikaler Position, und
- Figur 14: eine perspektivische Ansicht der Rolleinheit.

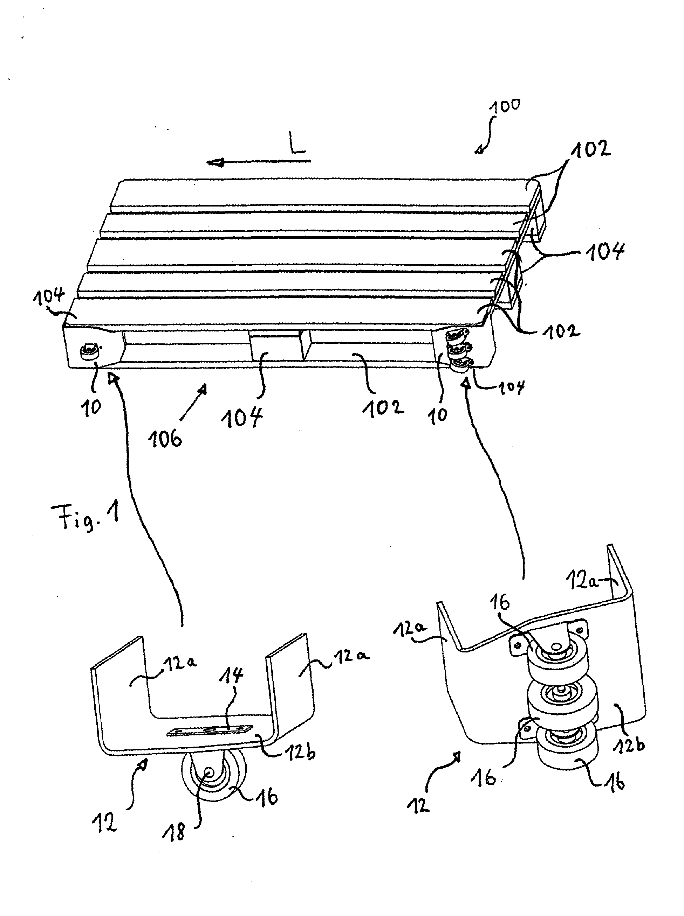

Die in Figur 1 gezeigte Palette 100 umfasst zwei Reihen von Brettern 102, die über Abstandklötze 104 voneinander beabstandet sind, um den Transport mittels eines Gabelstaplers oder eines Palettenhubwagens zu ermöglichen. Die Palette 100 ist eine sogenannte Europalette und besteht aus Holz. Mit der erfindungsgemäßen Transportvorrichtung lassen sich darüber hinaus auch anders ausgestaltete Paletten transportieren, die gegebenenfalls aus anderen Materialien bestehen.

An einer Längsstirnseite 106 der Palette 100 sind zwei Rolleinheiten 10 an den jeweiligen am weitesten entfernt voneinander angeordneten Abstandsklötzen 104 angeordnet.

Wie in den Figuren 1 und 3 bis 5 dargestellt ist, weist jede Rolleinheit einen U-förmigen Klemmbügel 12 zum Anklemmen an den jeweiligen Abstandsklotz 104 der Palette 100 auf. Der Klemmbügel umfasst zwei Seitenschenkel 12a, die durch einen Verbindungsschenkel (Basisplatte) 12b miteinander verbunden sind. Die beiden Seitenschenkel 12a des Klemmbügels 12 können etwas nach innen geneigt sein, um das Anklemmen an den jeweiligen Abstandsklotz 104 der Palette vornehmen zu können; sie umschließen die Palette, nachdem die Rolleinheit 10 an die Palette angeklemmt ist.

Mindestens einer der Seitenschenkel 12a kann - wie in Figur 14 dargestellt - einen Handgriff 122 aufweisen, der insbesondere als Öffnung (Durchlass) im Seitenschenkel 12a ausgebildet ist. Der Handgriff 122 ermöglicht sowohl den einfachen Transport des Klemmbügels 12 als auch das einfache Anklemmen des Klemmbügels 12 an die Palette 100 als auch das einfache Ablösen des Klemmbügels 12 von der Palette 100. Weiterhin ermöglicht der Handgriff 122 das einfache Anbringen des Klemmbügels 12 an eine Wand, um diesen für den nächsten Einsatz bereit zu halten.

Schließlich kann - wie ebenfalls in Figur 14 dargestellt - mindestens einer der Seitenschenkel 12a an seiner dem Rollelement 16 abgewandten Seite eine nach außen abgewinkelte Kante (Einfügungskante) 121 aufweisen, die das Anklemmen des Klemmbügels bzw. das Einfügen der Palette in den Klemmbügel erleichtert. . Diese nach außen abgewinkelte Kante 121 schließt sich an den nach innen geneigten Teil des Seitenschenkels 12a an.

In einer anderen Ausführungsform ist der Klemmbügel 12 starr ausgebildet und weist federnde Zwischenstücke, wie z.B. Blattfedern oder Gummileisten auf, die eine Klemmung mit dem jeweiligen Abstandsklotz 104 der Palette 100 vornehmen.

Jede Rolleinheit 10 weist außerdem eine Halterung 14 auf, die mindestens ein Rollelement, insbesondere ein Rad 16 auf einer Achse 18 drehbar lagert.

Vorzugsweise ist das Material des Klemmbügels 12 Kunststoff oder Metallblech.

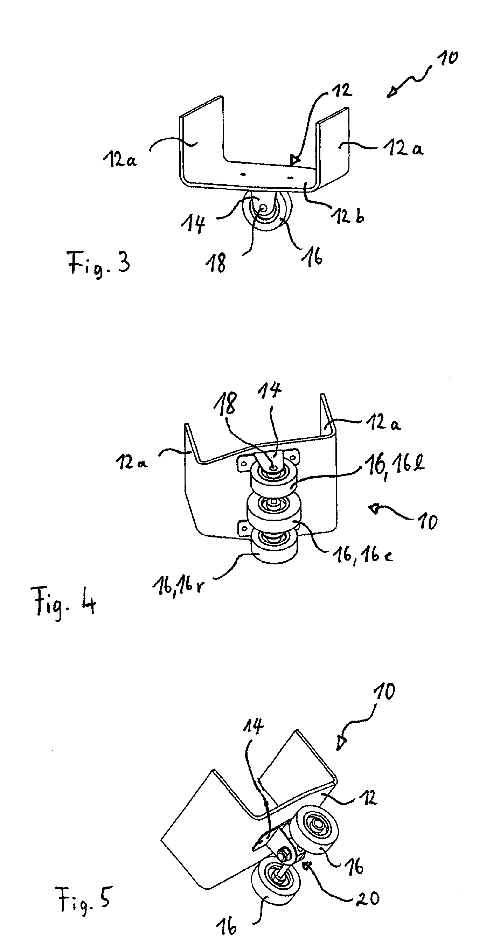

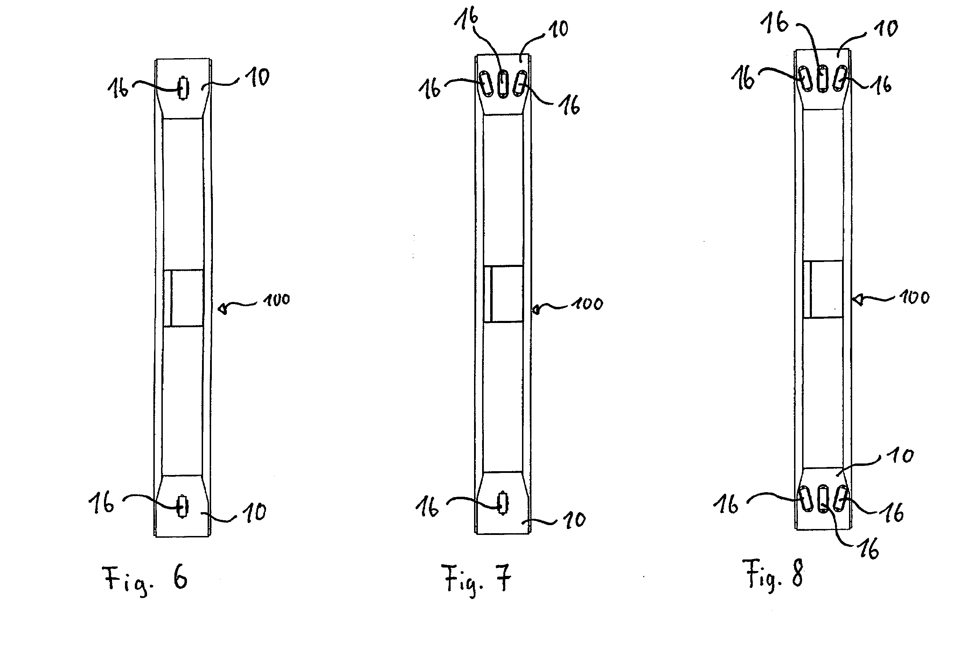

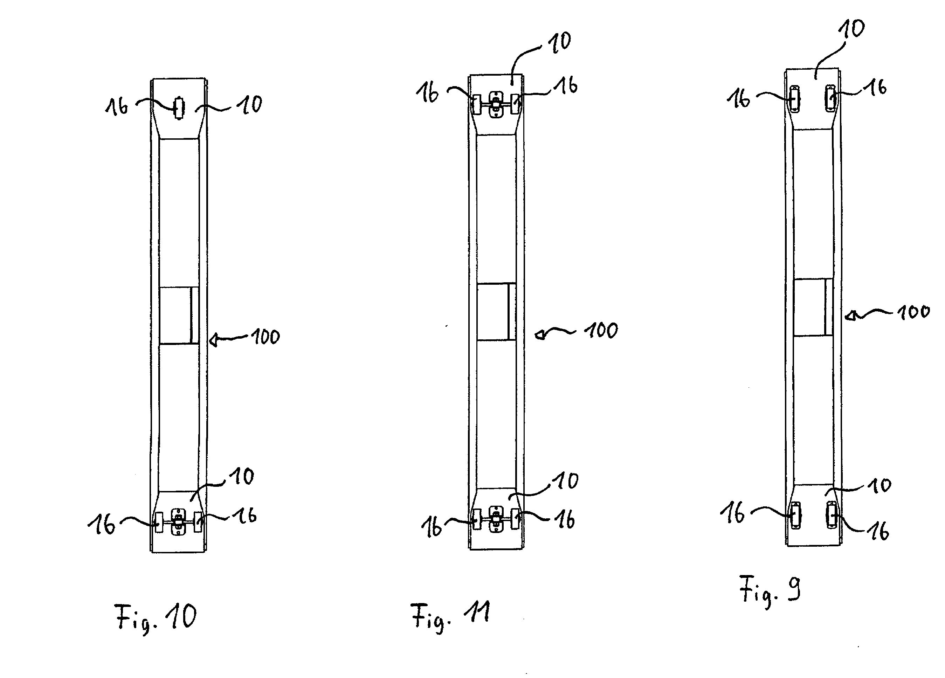

In den Figuren 1 und 3 ist eine Ausführungsform einer Rolleinheit 10 gezeigt, bei der die Halterung 14 ein Rad 16 drehbar lagert, das in Richtung einer Längsachse L der Palette 100 weist. Es ist also in einer Ebene angeordnet, die parallel zur Ober- bzw. Unterseite der Palette 100 angeordnet ist,

In den Figuren 1 und 4 ist eine Ausführungsform einer Rolleinheit 10 gezeigt, bei der die Halterung 14 drei Räder 16 bzw. 16I, 16c, 16r drehbar lagert. Die drei Räder sind im wesentlichen nebeneinander angeordnet; sie können jedoch versetzt zueinander angeordnet sein. Das mittlere Rad 16c der drei Räder weist in Richtung der Längsachse L der Palette 100, es ist also in einer Ebene angeordnet, die parallel zur Ober- bzw. Unterseite der Palette 100 angeordnet ist, währenddessen die beiden äußeren Räder 16l und 16r in einem vorgebbaren Winkel nach außen weisend angeordnet sind, wobei dieser Winkel vorzugsweise zwischen 10° und 20°, insbesondere 15° beträgt. Auf diesen Winkelbereich bzw. Winkelwert ist die Erfindung jedoch nicht eingeschränkt.

Das mittlere Rad 16c der drei Räder 16c, 16l, 16r hat vorzugsweise einen größeren Durchmesser als die beiden äußeren Räder 16l, 16r.

Die Halterung 14 kann drei Achsen zum Lagern der drei Räder 16 aufweisen oder eine gemeinsame Achse 18 zum Lagern der drei Räder 16 aufweisen.

Das mittlere Rad 16c der drei Räder 16 ist mit einem größeren Abstand zum Klemmbügel 12 aufgebracht als die beiden äußeren Räder 16l, 16r. Wie außerdem in Figur 4 gezeigt ist, sind die beiden Seitenschenkel 12a mit einer unterschiedlichen Breite ausgebildet, so dass bei Aufstecken des Klemmbügels 12 auf einen Abstandsklotz 104 der Palette 100 die Richtung vorgegeben ist, da nur der schmalere Seitenschenkel 12a zur inneren Seite der Palette 100 weisend eingeführt werden kann.

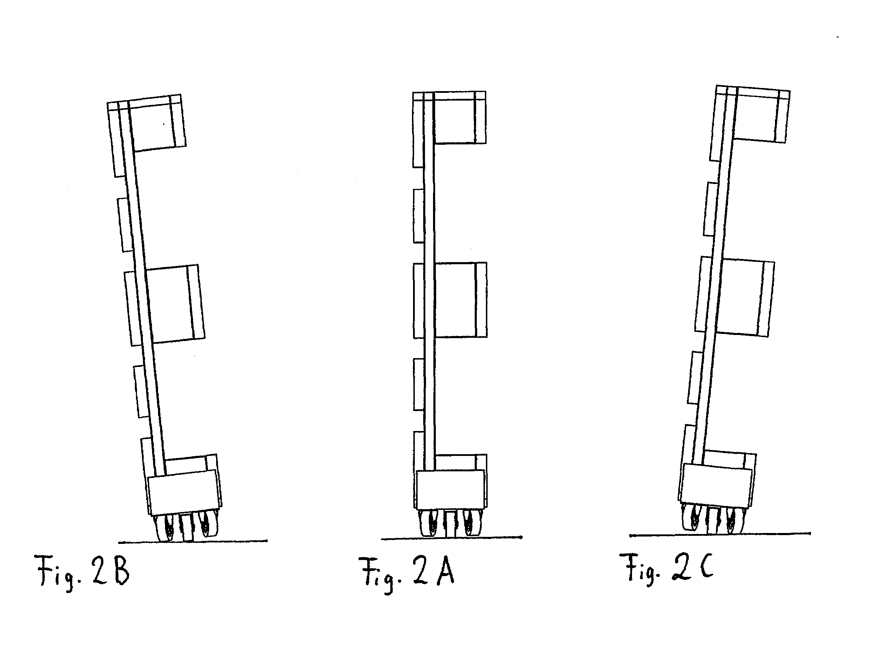

Die Figuren 2A bis 2C zeigen die in Figur 1 mit zwei Rolleinheiten 10 bestückte Palette 100, die sich in einer im wesentlichen senkrechten Lage befindet, wobei Figur 2A die senkrechte Stellung in Geradeausrichtung der Palette 100 zeigt, Figur 2B die leicht nach links geneigte Stellung der Palette 100 und Figur 2C die leicht nach rechts geneigte Stellung der Palette 100, um eine Rechtskurve zu fahren. Aus den Figuren 2A bis 2C wird ersichtlich, wie durch einfaches Neigen der Palette 1 deren Transportrichtung beeinflusst werden kann.

Wie Figur 5 zeigt, weist die Rolleinheit 10 eine Halterung 14 mit zwei Rädern 16 (Doppelrad) auf, wobei die Halterung 14 mit einem Schwenkmechanismus 20 versehen ist, wie er z.B. aus der WO 92/155377 zur Steuerung der Fahrtrichtung eines Skateboards bekannt ist. In der in Figur 5 gezeigten Ausführungsform sind beide Räder 16 an einer gemeinsamen Achse 18 drehbar angeordnet. Der Radius der Kurvenfahrt der Palette 100 wird durch den Neigungswinkel der Palette 100 in Höhenrichtung bestimmt, so dass die Kurvenfahrten gezielt gesteuert werden können.

In einer nicht in den Figuren gezeigten Ausführungsform können zwei Räder 16 als Doppelrad auch ohne den Schwenkmechanismus 20 ausgebildet sein, so dass das Doppelrad nicht lenkbar bzw. unlenkbar ist.

Die Figuren 6 bis 11 zeigen auf schematische Weise unterschiedliche Kombinationen von Rolleneinheiten 10, die an der Palette 100 angeordnet sind.

Figur 6 zeigt eine Palette 100 mit zwei gleichartig ausgebildeten Rolleinheiten 10, die beide je ein Rad 16 aufweisen. Bei dieser Ausführungsform ist die Palette 100 beim Transport nicht lenkbar.

Figur 7 zeigt eine Palette 100 mit zwei Rolleinheiten 10, wobei die eine Rolleinheit 10 drei Räder 16 aufweist und die andere Rolleinheit 10 ein Rad 16 aufweist. Bei dieser Ausführungsform ist die Palette 100 beim Transport lenkbar.

Figur 8 zeigt eine Palette 100 mit gleichartig ausgebildeten Rolleinheiten 10, die beide je drei Räder aufweisen. Bei dieser Ausführungsform ist die Palette 100 in der Weise lenkbar, dass die Palette 100 durch ihre Neigung lenkbar ist, wobei die Palette 100 gegenlenkend reagiert, d.h. beide Seiten schwenken in unterschiedliche Laufrichtungen, so dass enge Kurvenfahrten möglich sind.

Figur 9 zeigt eine Palette 100 mit zwei gleichartig ausgebildeten Rolleinheiten 10, die jeweils zwei Räder 16 (Doppelrad) aufweisen. Bei dieser Ausführungsform ist die Palette 100 in der senkrechten Stellung vergleichsweise stabil, wobei diese Palette beim Transport nicht lenkbar ist.

Figur 10 zeigt eine Palette 100 mit zwei Rolleinheiten 10, von denen die eine Rolleinheit 10 ein Rad 16 aufweist und die andere Rolleinheit 10 mit zwei Rädern 16 (Doppelrad) mit einem Schwenkmechanismus 20 ausgebildet ist. Bei dieser Ausführungsform ist der Radius der Transportfahrt der Palette 100 durch den Grad der Neigung der Palette 100 steuerbar.

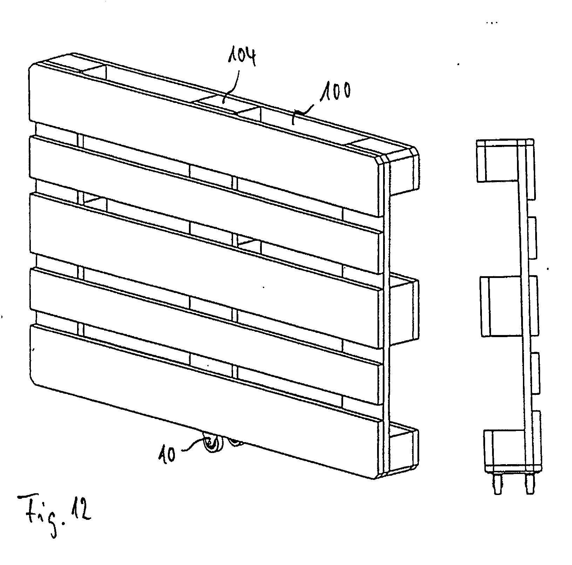

Figur 11 zeigt eine Palette 100 mit zwei gleichartig ausgebildeten Rolleinheiten 10, die beide je zwei Räder 16 (Doppelrad) mit einem Schwenkmechanismus 20 aufweisen. Bei dieser Ausführungsform ist der Radius der Transportfahrt der Palette 100 durch den Grad der Neigung der Palette 100 steuerbar, wobei bei dieser Ausführungsform sehr enge Kurvenfahrten möglich sind.

In einer alternativen Ausführungsform sind die Klemmbügel so verschwenkbar mit der Palette 100 verbunden, dass diese in den Innenraum der Palette 100, der durch die Abstandsklötze 104 gebildet wird, verschwenkbar sind.

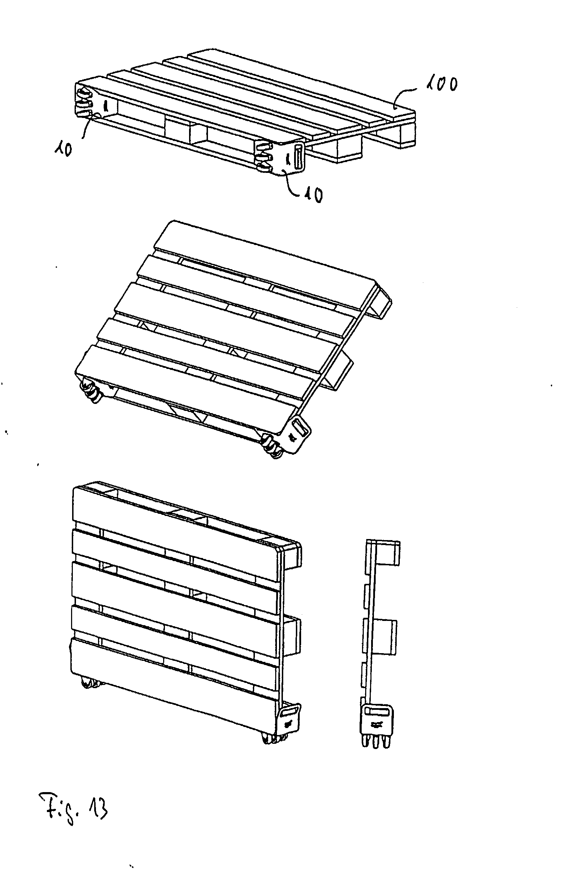

Figur 12 zeigt in perspektivischer Ansicht sowie in Seitenansicht eine Palette 100, an der lediglich eine Rolleinheit 10 an dem mittleren Abstandshalter 104 der Palette 100 vorgesehen ist. Im dargestellten Ausführungsbeispiel weist die Rolleinheit 10 zwei Räder auf.

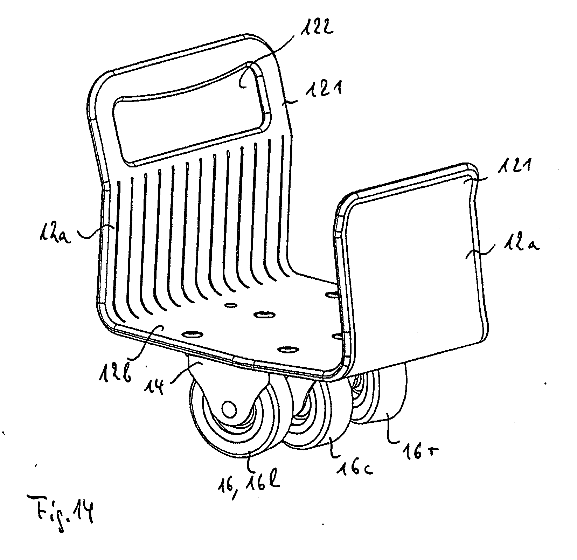

Figur 13 zeigt die Palette 100 in verschiedenen Arbeitsschritten bei dem Aufrichten aus der horizontalen Position, über eine geneigte Position in die vertikale Position. Weiterhin zeigt Figur 13 eine Seitenansicht der Palette mit der Transportvorrichtung in vertikaler Position.

Figur 14 zeigt eine bevorzugte Ausführungsform der Rolleinheit 10. Diese umfasst einen Verbindungsschenkel (Basisplatte) 12b, zwei Seitenschenkel 12a, sowie von einer Halterung 14 gehaltene Räder 16l, 16c und 16r. Im dargestellten Ausführungsbeispiel weisen beide Seitenschenkel 12a an ihrer den Rädern abgewandten Seite eine nach außen abgewinkelte Kante 121 auf.

Die beiden Seitenschenkel 12a des Klemmbügels 12 sind etwas nach innen geneigt, um das Anklemmen an den jeweiligen Abstandsklotz 104 der Palette zu erleichtern.

Einer der Seitenschenkel 12a weist einen Handgriff 122 auf, der als Öffnung im Seitenschenkel 12a ausgebildet ist.

Schließlich haben beide Seitenschenkel 12a an ihrer den Rädern 16 abgewandten Seite eine nach außen abgewinkelte Kante (Einfügungskante) 121, die sich an den nach innen geneigten Teil des Seitenschenkels 12a anschließt.

Die erfindungsgemäße Transportvorrichtung lässt sich auch in Ausführungsformen umsetzen, die Mischformen der vorstehend beschriebenen Ausführungsformen sind. So kann sie unter anderem eine, zwei oder drei Rolleinheiten aufweisen, wobei die Rolleinheiten hinsichtlich ihrer Rollelemente bzw. Räder in gleicher Weise oder in unterschiedlicher Weise ausgestaltet sein können.

Die Erfindung betrifft auch eine Rolleinheit 10 sowie eine Palette 100 mit einer vorstehend beschriebenen Transportvorrichtung.

### Bezugszeichenliste

- 10: Rolleneinheit
- 12: Klemmbügel
- 12a: Seitenschenkel
- 12b: Verbindungsschenkel
- 14: Halterung
- 16: Rollelement, Rad
- 16l: linkes Rad
- 16c: mittleres Rad
- 16r: rechts Rad
- 18: Achse
- 20: Schwenkmechanismus
- 100: Palette
- 104: Abstandsklotz
- 106: Längsstirnseite
- 121: Einfügungskante
- 122: Halte, -Trage-, Durchfassgriff

- L: Längsachse der Palette 100

## Patentansprüche

1. Transportvorrichtung für eine Palette (100),
**gekennzeichnet durch**
mindestens eine Rolleinheit (10), die aufweist:
einen Klemmbügel (12) zum Anklemmen der Rolleinheit (10) an die Palette (100), und
mindestens ein am Klemmbügel (12) drehbar angeordnetes Rollelement (16).

2. Transportvorrichtung nach Anspruch 1,
**dadurch gekennzeichnet, dass** der Klemmbügel (12) zwei Seitenschenkel (12a) aufweist, die die Palette (100) nach dem Anklemmen der Rolleinheit (10) an die Palette (100) umschließen.

3. Transportvorrichtung nach einem der vorstehenden Ansprüche,
**dadurch gekennzeichnet, dass** das mindestens eine Rollelement (16) ein Rad ist.

4. Transportvorrichtung nach Anspruch 3,
**dadurch gekennzeichnet, dass** die Rolleinheit (10) drei Räder (16c; 16l, 16r) aufweist.

5. Transportvorrichtung nach Anspruch 4,
**dadurch gekennzeichnet, dass** die drei Räder (16c, 16l, 16r) im wesentlichen nebeneinander angeordnet sind.

6. Transportvorrichtung nach Anspruch 5,
**dadurch gekennzeichnet, dass** das mittlere Rad (16c) der drei Räder (16c, 16l, 16r) mit einem größeren Abstand zum Klemmbügel (12) angeordnet ist als die beiden äußeren Räder (16l, 16r).

7. Transportvorrichtung nach Anspruch 5 oder 6,
**dadurch gekennzeichnet, dass** das mittlere Rad (16c) der drei Räder (16c, 16l, 16r) einen größeren Durchmesser als die beiden äußeren Räder (16l, 16r) hat.

8. Transportvorrichtung nach einem der Ansprüche 5 bis 7,
**dadurch gekennzeichnet, dass** die beiden äußeren Räder (16l, 16r) in einem vorgebbaren Winkel, insbesondere von etwa 15° nach außen weisend angeordnet sind.

9. Transportvorrichtung nach einem der vorstehenden Ansprüche,
**dadurch gekennzeichnet, dass** sie mindestens zwei Rolleinheiten (10), insbesondere zwei oder drei Rolleinheiten (10) aufweist.

10. Transportvorrichtung nach einem der vorstehenden Ansprüche,
**dadurch gekennzeichnet, dass** sie zwei Rolleinheiten (10) aufweist, und dass die eine Rolleinheit (10) drei Räder (16c, 16l, 16r) und die andere Rolleinheit (10) ein Rad (16) aufweist.

11. Transportvorrichtung nach einem der Ansprüche 1 bis 9,
**dadurch gekennzeichnet, dass** sie zwei Rolleinheiten (10) aufweist, und dass jede Rolleinheit (10) drei Räder (16c, 16l, 16r) aufweist.

12. Transportvorrichtung nach einem der Ansprüche 1 bis 9,
**dadurch gekennzeichnet, dass** sie zwei Rolleinheiten (10) aufweist, und dass jede Rolleinheit (10) zwei Räder (16) aufweist, die beide nicht lenkbar sind.

13. Transportvorrichtung nach einem der Ansprüche 1 bis 9,
**dadurch gekennzeichnet, dass** sie zwei Rolleinheiten (10) aufweist, und dass jede Rolleinheit (10) mittels eines Schwenkmechanismus (20) schwenkbar ausgebildet ist.

14. Transportvorrichtung nach einem der Ansprüche 1 bis 9,
**dadurch gekennzeichnet, dass** sie zwei Rolleinheiten (10) aufweist, und dass die eine Rolleinheit (10) ein Rad (16) aufweist, dass die andere Rolleinheit (10) zwei Räder (16) aufweist, und dass die andere Rolleinheit (10) mittels eines Schwenkmechanismus (20) schwenkbar ausgebildet ist.

15. Transportvorrichtung nach einem der Ansprüche 2 bis 14,
**dadurch gekennzeichnet, dass** mindestens einer der Seitenschenkel (12a) an seiner dem Rollelement (16) abgewandten Seite eine nach außen abgewinkelte Kante (121) aufweist.

16. Transportvorrichtung nach einem der Ansprüche 2 bis 15,
**dadurch gekennzeichnet, dass** mindestens einer der Seitenschenkel (12a) einen Durchlass aufweist.

17. Transportvorrichtung nach einem der vorhergehenden Ansprüche,
**dadurch gekennzeichnet, dass** die Rolleinheit (10) in der Weise ausgestaltet ist, dass sie auf die Palette (100), die auf einer Unterlage in einer im wesentlichen horizontalen Position angeordnet ist, aufbringbar ist, und dass die Rolleinheit (10) weiterhin in der Weise ausgestaltet ist, dass die Palette (100) nach Aufbringen der Rolleinheit (10) in eine im wesentlichen vertikale Position verschwenkbar ist.

18. Transportvorrichtung nach einem der vorhergehenden Ansprüche,
**dadurch gekennzeichnet, dass** die Rolleinheit (10) an einer Stirnseite der Palette (100) angeordnet ist, und dass mindestens ein Rollelement (16) in einer Ebene angeordnet ist, die parallel zu Ober- und/oder Unterseite der Palette (100) angeordnet ist.

19. Rolleinheit (10) für eine Transportvorrichtung nach einem der vorstehenden Ansprüche.

20. Palette (100) mit einer Transportvorrichtung nach einem der Ansprüche 1 bis 18.
